Europäisches Patentamt

European Patent Office

Office européen des brevets

(19)

(11) Publication number: **0 031 157**
**A2**

## (12) EUROPEAN PATENT APPLICATION

(21) Application number: **80108058.1**

(22) Date of filing: **19.12.80**

(51) Int. Cl.³: **B 29 C 3/00**
**B 29 D 9/00, B 29 D 23/00**

(30) Priority: **21.12.79 IT 2831879**

(43) Date of publication of application:
**01.07.81 Bulletin 81/26**

(84) Designated Contracting States:
**AT BE CH DE FR GB LI NL SE**

(71) Applicant: **Montedison S.p.A.**
**31, Foro Buonaparte**
**Milan(IT)**

(72) Inventor: **Branchesi, Millo, Dr.**
**6-A, Vocabolo S. Clemente**
**Terni(IT)**

(72) Inventor: **Rosati, Luciano**
**4, Via Termine**
**Stroncone (Terni)(IT)**

(74) Representative: **Zumstein, Fritz, Dr. Dr. F. Zumstein**
**sen. Dr. E. Assmann et al,**
**Dr. R. Koenigsberger Dr. F. Zumstein jun. Dipl.-Ing. F.**
**Klingseisen Bräuhausstrasse 4**
**D-8000 München 2(DE)**

(54) Manufactured articles from film forming polymers having an oriented structure, and process for the preparation of the same.

(57) Manufactured articles with an oriented structure, in the form of plates, tubes and formed objects having a minimum thickness of at least 0.3 mm, obtained from film forming polymers susceptible to be oriented, by compression under heat of an assembly of oriented films superimposed on each other.

EP 0 031 157 A2

- 2 -

The present invention concerns manufactured articles with improved physical-mechanical and optical properties, such as plates, tubes, sandwich structures and formed bodies in general, as well as to the process for their preparation.

It is quite known that film forming polymers, susceptible of being oriented, such as for instance isotactic polypropylene, polyesters, polycarbonates, polyamides, may be formed, in general, by thermoforming operations such as pressing, calendering, extrusion, pressure injection molding, vacuum-forming and the likes.

The manufactured articles obtained with the above-mentioned processes display mechanical and physical properties that differ from those of the manufactured articles obtained from the same polymers and having a highly oriented structure, more particularly, in general they are little transparent with consequently a limitation of the applicative fields.

So far there have been obtained, with industrial processes, articles with a highly oriented structure only in the form of fibres and films.

Thus object of this invention is that of providing manufactured articles consisting of plates, tubes and formed bodies in general, having a minimum thickness of at least 0.3 mm and a highly oriented structure, characterized in that they show mechanical and physical properties that are much higher than those obtainable in analogous articles obtained by conventional processes.

These manufactured articles are obtained by pressing under heat (thermopressing) a combination of superimposed oriented films.

. . .

The manufactured articles obtained according to this invention, in general appear as a compact material, displaying a high degree of physical homogeneity.

The preparation process includes the following phases:

1) Several mono- or bi-stretched films are superimposed on each other, either by unwinding numerous film reels or by winding up the film in many layers on a cylinder and then by cutting the film along the generating line of the cylinder, or by other methods;

2) The structure formed by the assembly of superimposed films is subjected to a thermopressing operation, on presses, calenders and the like, at pressures comprised between 1 and 500 $Kg/cm^2$, at temperatures lower than, but near, the crystalline melting temperature in the case of prevailingly crystalline polymers, while in the case of prevailingly amorphous polymers, at temperatures near the glass transition temperature and not greater than the softening temperature.

The pressing time varies from one second to several hours and is inversely proportional to the pressure.

Preferably there are used pressures of at least 10 $Kg/cm^2$.

The thermopressing may be achieved without applying a pressure from the outside in the case of manufactured articles with a curved surface and such as to allow to exploit the pressure resulting from the thermoshrinkage stresses developed by the single films, in order to obtain the compression and forming effect.

...

- 4 -

The superimposition of the single films may be carried out in such a way that the directions of orientation of the single films shall cross each other.

As film-forming polymers susceptible to of being oriented and suited for use in this invention, proved to be: the polymers capable of supplying oriented film such as the poly esters, the polyamides, the vinylidene and vinyl polymers and copolymers and the like.

The films, before their superimposition, may be subjected to a surface treatment with continuous, non-perforating electrical discharges, or by means of chemical agents or by flame.

The films, whose thickness may vary within very wide ran ges, are superimposed and then thermopressed in different numbers, depending on the thickness that one desires to obtain on the manufactures article.

In the preparation of the manufactured articles according to this invention, there may also be used films made of two or more different polymers, chosen from amongst the above mentioned ones, by suitably combining them with each other.

The preparation of the mono- or bi-oriented films to be used in the manufacture of manufactured articles according to this invention, is carried out with the help of conventional methods and equipment. In the case one wishes to obtain products with a high transparency, it will be necessary to use films with haze values, in general, lower than 5%

. . .

(measured according to ASTM D 1003).

Thereby there are obtained manufactured articles of high transparency, while in the manufactured articles of the same thickness, but obtained by forming powders, granules or flakes of film-forming polymers, according to conventional methods in presses, calenders, in thermoforming equipment and the like, no transparency will be achieved.

Moreover, the manufactured articles according to this invention, in comparison with the conventionally manufactured articles, show much higher values as to tensile strength, flexural strength, impact strength and perforation strength, which remain excellent even at low temperatures. Moreover, the linear thermal expansion coefficient is significantly much lower.

More particularly, the manufactured articles obtained starting from bi-stretched films, show a breaking load greater than 10 Kg/cm$^2$ (measured according to ASTM D 638), a Rockwell hardness of at least 85 (according to ASTM D 785 of the HRL scale), a perforation strength greater than 1,000 Kg/cm of thickness (according to the method described in "Materie Plastiche & Elastomeri" 37 (1971) pages 670 - 673). In many cases they do not show any brittle fracture at -50 °C. Some of them show a high transparency.

The oriented structure manufactured articles, prepared according to this invention, find their direct use in the form of plates, tubes and the like, as well as in the preparation of other manufactured articles such as, for instance, sandwich structures.

...

- 6 -

Thanks to their high mechanical properties the manufactured articles according to this invention give excellent performances in the form of protective screens.

In the practical embodiments of this invention there may be introduced wide modifications and changes, without thereby falling outside the concept and the protective scope of the invention itself.

The following examples are given for purely illustrative and not limiting purposes.

EXAMPLE 1 :

A film was prepared by film forming a polyester having an intrinsic viscosity $[\eta]$ = 0.4, carrying out the following successive operations :

a) preparation of the non-stretched film by extrusion of the polymer at 280 °C;

b) stretching in a longitudinal direction, at 80°C, with a stretch ratio equal to 1:3;

c) stretching in a transversal direction, at 80°C, with a stretching ration equal to 1:3.5;

d) winding up.

80 sheets of stretched film, having a thickness of 25 $\mu$, were superimposed to each other thus forming a flat structure about 2 mm thick.

The structure formed by the superimposed films was subjected to pressing in a Carver press, at 250°C and under a pressure of 40 Kg/cm$^2$ for about 1 minute, whereafter it was cooled down in the press to 100 °C. The plate thus obtained showed

...

- 7 -

the following characteristics :

- thickness (in mm): 2;

- breaking load $(Kg/mm^2)$: 12 (measured according to

ASTM D 638);

- elongation at break (in %): 15 (measured according to

ASTM D 638);

- Rockwell hardness = 100 (according to ASTM D 785,

scale HRL).

A specimen of the above said plate obtained from a bi-oriented film, when subjected to a perforation strength test carried out with a punch of 10 mm diameter and with a spherical head, diameter of free span 20 mm, fixing of the specimen with screws, test velocity 200 mm/1 min., temperature of 23 °C, showed a maximum load of 1,600 Kg/cm of thickness. This test has been described by T. Casiraghi e C. Castagna in: "Materie Plastiche ed Elastomeri" 37 (1971), pages 670-3. With a polycarbonate plate there was obtained: maximum load equal to 1,330 Kg/cm of thickness and free span of 11 mm. A comparative plate, prepared by pressure casting at 260 °C, and then cooled down to 20 °C, showed the following characteristics :

- thickness (in mm): 2

- breaking load $(Kg/mm^2)$: 5.

- elongation at break (in %): 50

- perforation strength: 500 $Kg.cm^{-1}$

EXAMPLE 2 :

A polyamidic film was prepared by film forming Nylon 6 hav-

...

ing a relative viscosity of 3.01, carrying out the successive operations of :

a) preparation of a non-stretched film by extrusion of the polymer at 270 °C;

b) stretching in a longitudinal direction, at 15 °C, with a stretch ratio equal to 1:4;

c) stretching in a transversal direction at 95 °C, with a stretch ratio equal to 1:4;

d) winding up.

80 sheets of a bi-streched film, having a thickness of 25 micron, were superimposed to each other thus forming a flat layered structure about 2 mm thick.

This structure, formed by superimposed films, was subjected to pressing in a Carver press at 220 °C and under a pressure of 40 $Kg/cm^2$ for about 1 minute, whereafter it was cooled down in the press to 100 °C.

The plate thus obtained showed the following characteristics :

- thickness (in mm):          2

- breaking load ($Kg/mm^2$):          11.5 (measured according to ASTM D 638);

- elongation at break (in %): 200   (measured according to ASTM D 638);

- haze (in %):          2.7

- perforation strength:          2,900    $Kg.cm^{-1}$(method of example 1);

- Rockwell hardness:          94    (according to ASTM D 785, scale HRL).

A specimen of the above mentioned plate obtained from a bi-

...

-oriented film, and then subjected to an impact strength test at a temperature of -50 °C, by percussion with a dropping dart having a curvature radius of the point of 5 mm and a falling velocity of 3.46 m/sec., resisted up to energy values of 80 Kg·cm.

A comparative plate, prepared by injection moulding at 240 °C, and cooled down to 20 °C, showed the following characteristics :

- thickness (in mm):        2
- breaking load ($Kg/mm^2$):    4.5
- elongation at break (in %): 400
- perforation strength :     900  $Kg.cm^{-1}$
- impact strength under cold: fragile at -20 °C
- Rockwell hardness  =      55
- haze (in %) :        60.

. . .

- 1 -

C L A I M S
============

1) Manufactured articles with an oriented structure in the form of plates, tubes and molded objects having a minimum thickness of at least 0.3 mm, obtained starting from oriented films of film forming polymers.

2) Manufactured articles according to claim 1, characterized in that they are obtained by thermopressing.

3) Manufactured articles according to either claim 1 or 2, characterized in that the film forming polymer is a crystalline polymer selected from polyesters, polyamides, vinyl and vinylidene polymers and copolymers.

4) Process for obtaining the manufactured articles of claim 2, consisting in the thermopressing of an assembly of oriented films, superimposed on each other, at a pressure comprised between 1 and 500 $Kg/cm^2$, at a temperature lower than, but near the crystalline melt temperature, in the case of prevailingly crystalline polymers, while in the case of prevailingly amorphous polymers, at temperatures near the glass transition temperature and in any case not greater than the softening temperature.

5) Process according to claim 4, characterized in that the thermopressing for the preparation of the manufactured articles with a curved surface, is carried out without applying an external pressure but just exploiting the pressure resulting from the tensions of the thermoshrinkage of the single films.